# EUROPEAN PATENT SPECIFICATION

(11) **EP 1 747 874 B1**
(45) Date of publication and mention of the grant of the patent: **21.09.2011**
(21) Application number: 05090222.0
(22) Date of filing: 26.07.2005
(51) Int. Cl.: B29C 51/32

(54) **Moulding machine**
Formmaschine
Machine de moulage

(43) Date of publication of application: 31.01.2007
(73) Proprietor: Kojima Press Industry Co., Ltd., Toyota-shi, Aichi-ken (JP); Tekunohama Co. Ltd., Toyota-shi Aichi-ken (JP)
(72) Inventor: Ogawa, Masanori, c/o Tekunohama Co. Ltd., Toyota-shi, Aichi-ken (JP); Yumiketa, Takashi, c/o Tekunohama Co. Ltd., Toyota-shi, Aichi-ken (JP); Kitai, Eiji, c/o Tekunohama Co. Ltd., Toyota-shi, Aichi-ken (JP)
(74) Representative: Baumgärtel, Gunnar

(56) References cited:
- EP-A- 0 547 703
- WO-A-99/64221
- GB-A- 564 126
- US-A- 4 243 456
- PATENT ABSTRACTS OF JAPAN vol. 011, no. 196 (M-601), 24 June 1987 (1987-06-24) -& JP 62 019430 A (MEIWA SANGYO KK), 28 January 1987 (1987-01-28) -& DATABASE WPI Week 198710 Derwent Publications Ltd., London, GB; AN 1987-067569 XP002362316 & JP 62 019430 A 28 January 1987 (1987-01-28)

## Description

The present invention relates to molding machines for manufacturing a molded article from a sheet material.

A known method for manufacturing a molded article is taught, for example, by Japanese Laid-open Patent Publication Number 2002-144413. In this known art, a sheet material is placed between upper and lower dies of a molding machine. Thereafter, the upper die is lowered by a predetermined distance toward the lower die so that a punch associated with the upper die is engaged with a corresponding die recess defined in the lower die (i.e., a press molding step). As a result, the sheet material is press molded so as to form a molded material. Subsequently, the upper die is further lowered toward the lower die so that a heated cutter blade associated with the upper die contacts the periphery of the molded material (i.e., a trimming step). As a result, the molded material is circumferentially cut or trimmed by heat from the cutter blade so that a waste is removed therefrom. Thus, a molded article is manufactured.

According to this known method, the trimming step can be performed substantially simultaneous with the press molding step in the molding machine. That is, the trimming step can be performed in the molding machine without using a special trimming machine.

EP 0 547 703 A1 discloses a molding machine according to the preamble of claim 1.

Nearest prior art document JP 62019430 A discloses a molding apparatus which is intended to be used in such a way that trimming members trim only a base layer material of a product being molded in the apparatus, whereas a skin material is not cut off.

GB 564,126 A discloses an apparatus for molding and trimming thermoplastic sheet material into shaped articles, whereas during molding of the shaped articles surplus material is being trimmed off.

US 4,243,456 discloses a molding press apparatus for producing a shaped stratiform and self-supporting laminate having a substantially rigid thermoplastic substrate and a coating layer of a flexible sheet material adhering on said substrate, whereby integral trimming of the shaped stratiform and self-supporting laminate is being achieved during molding.

WO 99/64221 A1 discloses an apparatus for twin sheet thermoforming, wherein a controlled pressure differential between two parts of the apparatus is being applied in order to achieve the desired shaping effect.

It is, accordingly, one object of the present invention to provide improved machines for manufacturing molded articles.

In one embodiment of the present invention, a molding machine may include first and second dies arranged and constructed to be closed and opened, and first and second trimming members arranged and constructed to engage with each other after the first and second dies are closed. When the first and second dies are closed, a resin based sheet material is pressed so as to form a molded material. When the first and second trimming members engage with each other, the molded material is circumferentially trimmed so as to produce a molded article and a waste strip.

According to the present invention, the molded material is circumferentially trimmed by the first and second trimming members that are disposed in the molding machine, so that the molded article is produced. That is, the molding machine includes a trimming mechanism that can trim the molded material so as to produce the molded article. Therefore, it is not necessary to use an additional or special trimming machine in order to trim the molded material. Consequently, the molded article can be efficiently or speedily manufactured. This may lead to the minimization of manufacturing costs of the molded article.

Other objects, features and advantages of the present invention will be readily understood after reading the following detailed description together with the accompanying drawings and the claims.
FIG. 1 is a side cross-sectional view of a molding machine according to one representative embodiment of the present invention;
FIG. 2 is an enlarged side cross-sectional view of upper and lower die units of the molding machine, illustrating a condition in which a sheet material is fed between upper and lower dies of the upper and lower die units;
FIG. 3 is an enlarged side cross-sectional view of the upper and lower die units, illustrating a condition in which the sheet material is press molded in order to form a molded material;
FIG. 4 is an enlarged side cross-sectional view of the upper and lower die units, illustrating a condition in which the molded material is cut or trimmed in order to form a molded article and a waste strip;
FIG. 5 is an enlarged side cross-sectional view of the upper and lower die units, illustrating a condition in which the upper and lower dies are reopened so that the molded article is retained; and
FIG. 6 is an enlarged side cross-sectional view of the upper and lower die units, illustrating a condition in which the molded article and the waste strip are released from the upper and lower dies.

A representative example of the present invention has been described in detail with reference to the attached drawings. This detailed description is merely intended to teach a person of skill in the art further details for practicing preferred aspects of the present invention and is not intended to limit the scope of the invention. Only the claims define the scope of the claimed invention. Therefore, combinations of features and steps disclosed in the foregoing detail description may not be necessary to practice the invention in the broadest sense, and are instead taught merely to particularly describe detailed representative examples of the invention. Moreover, the various features taught in this specification may be combined in ways that are not specifically enumerated in order to obtain additional useful embodiments of the present invention.

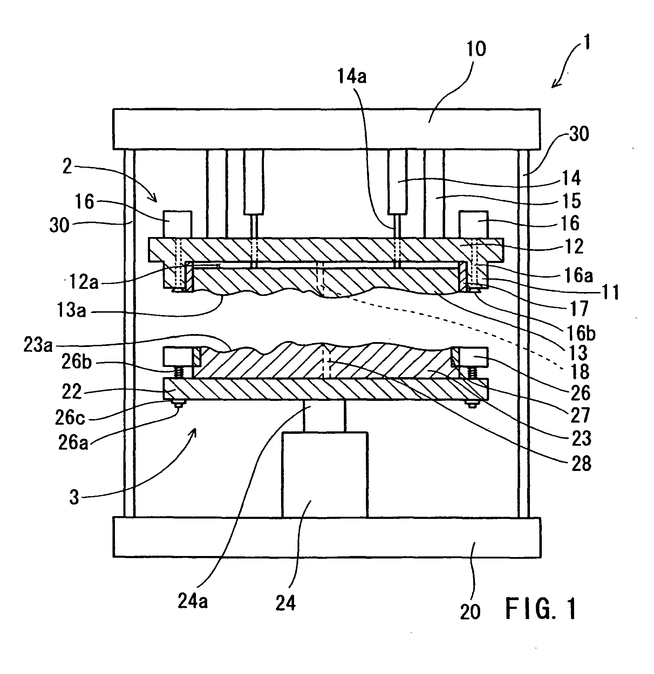

A detailed representative embodiment of the present invention is shown in FIGS. 1 to 6.

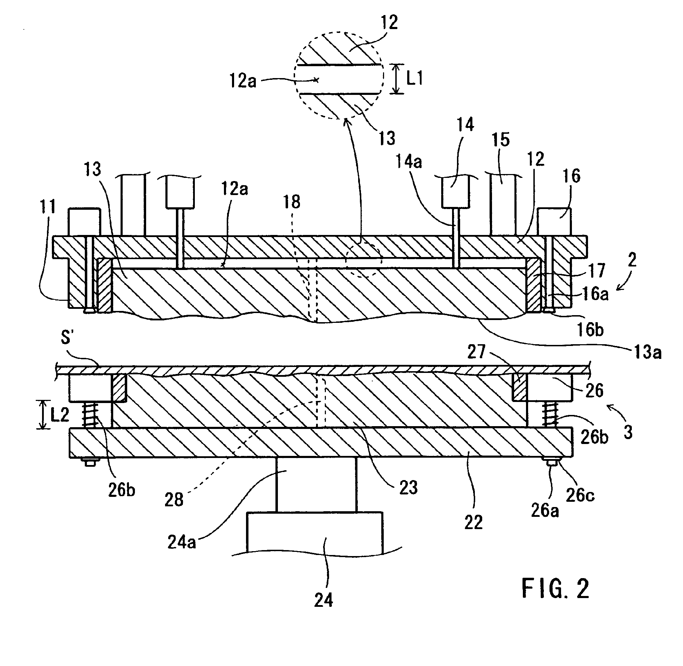

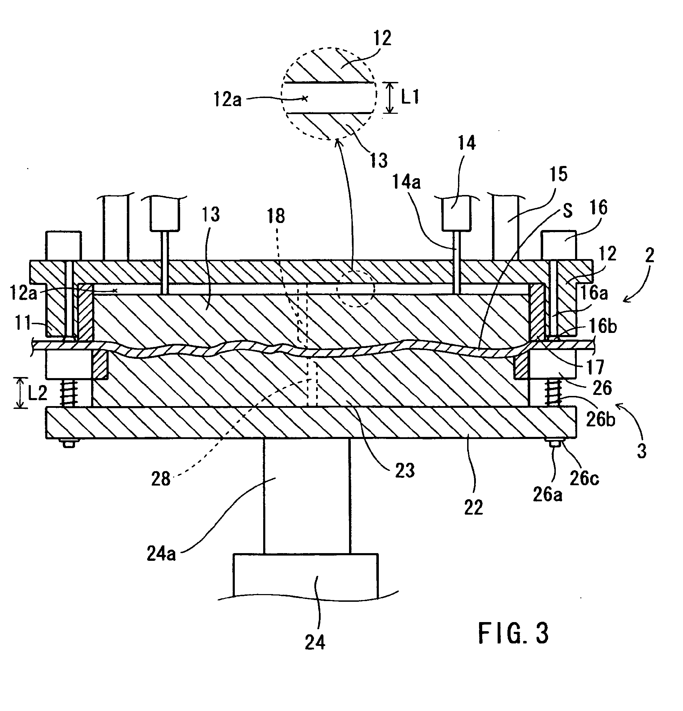

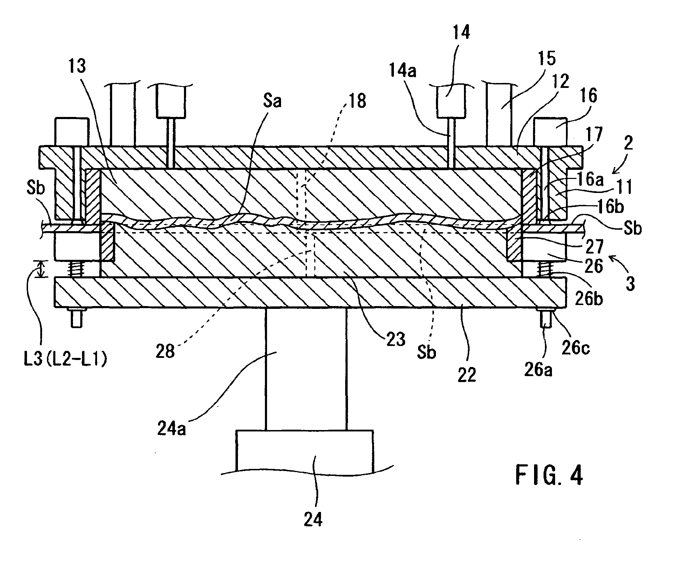

A molding machine 1 is intended to press a sheet material S' (FIGS. 1 and 2) in order to form a molded material S (FIG. 3), and then to trim the molded material S in order to produce a molded article Sa and a waste strip Sb (FIGS. 4-6). Further, the sheet material S' may preferably be a resin based sheet material.

As shown in FIG. 1, the molding machine 1 may include an upper or first lateral frame 10 and a lower or second lateral frame 20 that are interconnected via vertical support members 30. Also, the molding machine 1 may include an upper or first die unit 2 that is associated with the upper frame 10, and a lower or second die unit 3 that is associated with the lower frame 20.

The upper die unit 2 is essentially composed of an upper or first base member 12, and an upper or first die 13 having an upper molding surface 13a that corresponds to the molded article Sa. The upper base member 12 has an annular wall 11 and a downwardly directed recess 12a that is defined within the annular wall 11. The upper base member 12 thus constructed is attached to the upper frame 10 via a plurality of (e.g., two) vertical attachment members 15. The upper die 13 is vertically movably received within the recess 12a of the upper base member 12. Also, the upper die unit 2 includes a plurality of (e.g., two) hydraulic cylinders 14 that are vertically attached to the upper frame 10. Each of the hydraulic cylinders 14 has a cylinder rod 14a which is vertically movably received in a through bore (not shown) formed in the base member 12. As will be apparent, the cylinder rod 14a downwardly extends through the base member 12 and is connected to the upper die 13. Further, the hydraulic cylinders 14 may preferably be arranged and constructed such that a clearance having a distance L1 (e.g., FIG. 2) is normally formed between the upper base member 12 and the upper die 13.

The lower die unit 3 is essentially composed of a lower or second base member 22, and a lower or second die 23 having a lower molding surface 23a that corresponds to the molded article Sa. The lower die 23 is seated on lower base member 22. Also, the second die unit 3 includes a drive hydraulic cylinder 24 that is vertically disposed on and fixed to the lower frame 20. The hydraulic cylinder 24 has a cylinder rod 24a upwardly extending therefrom. The cylinder rod 24a is connected to the lower base member 22 so as to vertically move the same. As will be appreciated, when the hydraulic cylinder 24 is actuated, the lower base member 22 is vertically moved toward and away from the upper base member 12 via the cylinder rod 24a so that the upper and lower dies 13 and 23, respectively associated with the upper and lower base members 12 and 22, can be closed and opened.

The upper die unit 2 further includes an annular upper trimmer blade 17 (i.e., a first trimming member) that is attached to the upper base member 12 so as to be movably associated with the upper die 13. The upper trimmer blade 17 is intended to circumferentially trim the molded material S, thereby producing the molded article Sa and the waste strip Sb. The upper trimmer blade 17 may preferably be disposed within the recess 12a of the upper base member 12 so as to extend around the upper die 13. The upper die unit 2 additionally includes a plurality of (e.g., two) upper cutter blades 18 (i.e., a first cutting member) (one of which is shown) that is attached to the upper base member 12. The upper cutter blades 18 are intended to sever the waste strip Sb. The upper cutter blades 18 may preferably be positioned around the upper die 13 so as to be spaced apart from each other at a desired interval.

Similarly, the lower die unit 3 further includes an annular lower trimmer blade 27 (i.e., a second trimming member) that is attached to the lower die 23. The lower trimmer blade 27 is arranged and constructed to engage the upper trimmer blade 17 when the lower base member 22 is further moved toward the upper base member 12 after the upper and lower dies 13 and 23 are closed. The lower trimmer blade 27 may preferably be fitted to the lower die 23 so as to extend along an upper periphery of the lower die 23. The lower die unit 3 additionally includes a plurality of (e.g., two) lower cutter blades 28 (i.e., a second cutting member) (one of which is shown) that is attached to the lower base member 22. The lower cutter blades 28 are arranged and constructed to engage the upper cutter blade 18 when the lower base member 22 is further moved toward the upper base member 12 after the upper and lower dies 13 and 23 are closed. That is, the lower cutter blades 28 may preferably be positioned around the lower die 23 so as to correspond to the upper cutter blade 18.

The upper die unit 2 includes a plurality of (e.g., two) suction pumps 16 (i.e., a suction device) that is attached to the upper base member 12. Each of the suction pumps 16 includes a suction duct 16a that downwardly extends through the annular wall 11 of the upper base member 12, and a suction port 16b that opens at the end surface of the annular wall 11.

Conversely, the lower die unit 3 includes a plurality of (e.g., two) elongated block-shaped support members 26 for supporting a periphery of the sheet material S'. Each of the support members 26 may preferably be positioned so as to be closely adjacent to the lower trimmer blade 27 attached to the lower die 23. The support member 26 thus positioned is vertically movably attached to the lower base member 22 via a support shaft 26a having an elastic member 26b (e.g., a spring, rubber, or other such member) and an adjuster nut 26c. That is, the support member 26 is connected to the support shaft 26a, which is inserted into a through bore (not shown) formed in the lower base member 22. The elastic member 26b is interleaved between the support member 26 and the lower base member 22 so that the support member 26 can be normally upwardly biased. Further, the elastic member 26b may preferably be adjusted by the adjuster nut 26c such that a clearance having a distance L2 (e.g., FIG. 2) is normally formed between the support member 26 and the lower base member 22. Preferably, the elastic member 26b may be adjusted such that the upper surface of the support member 26 can be coplanar with the lower molding surface 23a of the lower die 23.

The support members 26 may preferably be disposed so as to respectively vertically align with the suction ports 16b of the suction pumps 16. Therefore, when the upper and lower dies 13 and 23 are closed, the periphery of the sheet material S' can be supported from the under side via the support members 26 and can be applied with a suction force from the upper side via the suction pumps 16. Thus, when the upper and lower dies 13 and 23 are closed, the periphery of the sheet material S' can be substantially horizontally positioned and reliably supported. As a result, the sheet material S' can be smoothly press molded without wrinkling so as to produce the wrinkle free molded material S (the wrinkle free molded article Sa).

Generally, each of the upper and lower die 13 and 23 may preferably be provided with a cooling mechanism (not shown) such as tubing for supplying a coolant (i.e., water or air).

Representative methods for manufacturing the molded article Sa using this molding machine 1 will now be described.
First, as shown in FIG. 2, the sheet material S' is fed into a space between the upper and lower dies 13 and 23 via a conveyer (not shown). As will be recognized, the sheet material S' has an external size greater than the external size of the lower molding surface 23a of the lower die 23. The fed sheet material S' is then disposed on the lower die 23 such that the periphery of the sheet material S' is protruded outwardly from the lower molding surface 23a of the lower die 23. Thus, the sheet material S' is disposed on the lower die 23 such that the periphery of the sheet material S' is supported by the support members 26.

Thereafter, the hydraulic cylinder 24 is actuated so that the lower base member 22 is upwardly moved toward the upper base member 12. As a result, as shown in FIG 3, the upper and lower dies 13 and 23 respectively associated with the upper and lower base members 12 and 22 are closed so that the sheet material S' is press molded, thereby forming the molded material S. At this time, the periphery of the molded material S may reliably be clamped between the annular wall 11 of the upper base member 12 and the support members 26 of the lower die unit 3. Also, at the same time, the suction pumps 16 of the upper die unit 2 are actuated so that the periphery of the molded material S is pulled toward the end surface of the annular wall 11 of the upper base member 12 by a suction force of the suction pump 16. Thus, the periphery of the sheet material S' can be reliably supported. Therefore, the sheet material S' can be molded into the molded material S without wrinkling. Further, when the upper and lower dies 13 and 23 are closed, the hydraulic cylinders 14 of the upper die unit 2 may preferably be actuated such that the distance L1 of the clearance formed between the upper base member 12 and the upper die 13 can be maintained.

Subsequently, the hydraulic cylinders 14 of the upper die unit 2 are deactuated while the hydraulic cylinder 24 is continuously actuated. As a result, as shown in FIG 4, the lower base member 22 is further upwardly moved toward the upper base member 12 by the hydraulic cylinder 24 so that the closed upper and lower dies 13 and 23 are pushed into the recess 12a of the upper base member 12 together with the molded material S until the clearance formed between the upper base member 12 and the upper die 13 is closed (i.e. until the upper die 13 reaches an uppermost position within the recess 12a of the upper base member 12). As shown in FIG. 4, at this time, the lower trimmer blade 27 of the lower die unit 3 engages the upper trimmer blade 17 of the upper die unit 2 so that the molded material S is circumferentially trimmed, thereby producing the molded article Sa and the waste strip Sb. Simultaneously, the lower cutter blades 28 of the lower die unit 3 engage the upper cutter blades 18 of the upper die unit 2, thereby cutting the waste strip Sb. As will be recognized, when the lower base member 22 is upwardly moved toward the upper base member 12, the support members 26 of the lower die unit 3 are pushed down relative to the upper and lower dies 12 and 23 because the support members 26 are prevented from moving upwardly by means of the annular wall 11 of the upper base member 12. Therefore, the distance L2 of the clearance that is formed between each of the support members 26 and the lower base member 22 is reduced to a distance L3 (which corresponds to L2 minus L1). Thus, when the molded material S is trimmed, the periphery of the molded material S can be reliably clamped between the annular wall 11 of the upper base member 12 and the support members 26 of the lower die unit 3. Therefore, the molded material S can be trimmed without wrinkling. As a result, the produced molded article Sa may have a good wrinkle free appearance.

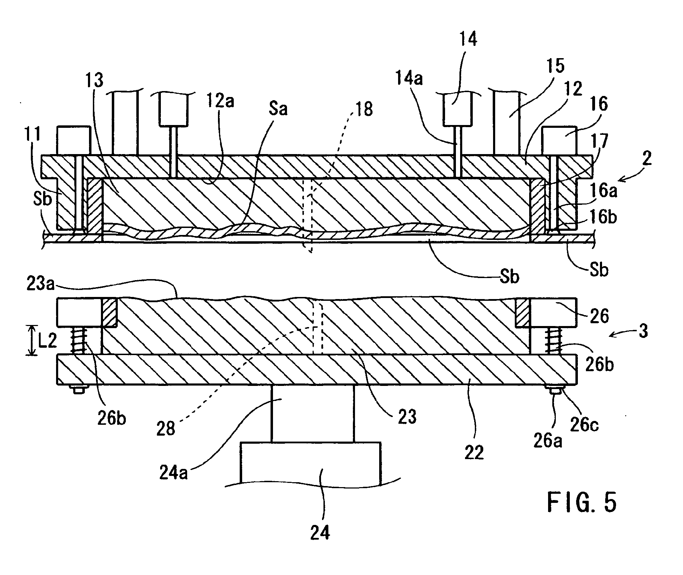

Subsequently, the hydraulic cylinder 24 is deactuated so that the lower base member 22 is lowered. As a result, as shown in FIG. 5, the upper and lower dies 13 and 23 are reopened. As will be apparent from FIG. 5, at this time, the upper die 13 is retained in the uppermost position within the recess 12a of the upper base member 12 because the hydraulic cylinders 14 of the upper die unit 2 are still deactuated. Therefore, the molded article Sa is retained on the upper die 13 by a frictional force between the molded article Sa and the upper trimmer blade 17. Conversely, the waste strip Sb is retained on the end surface of the annular wall 11 of the upper base member 12 by the suction force of the suction pump 16.

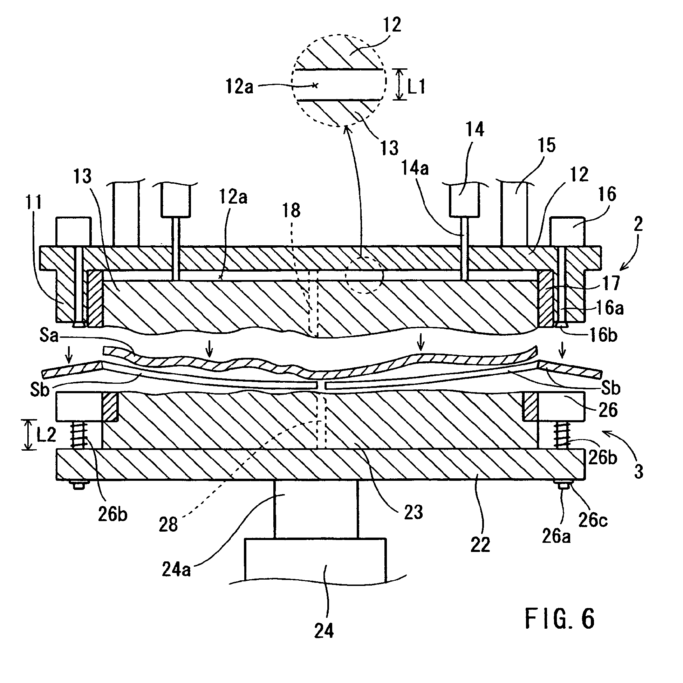

Thereafter, the hydraulic cylinders 14 of the upper die unit 2 are actuated again to move the upper die 13 downwardly such that the clearance having the distance L1 is formed again between the upper base member 12 and the upper die 13. As a result, as shown in FIG. 6, the molded article Sa retained on the upper die 13 is released therefrom. Subsequently, the suction pumps 16 of the upper die unit 2 are deactuated so that the cut waste strip Sb is released from the end surface of the annular wall 11 of the upper base member 12. Thus, the molded article Sa can be manufactured using this molding machine 1.

Upon completion of the formation of the molded article Sa, the manufacturing process is repeated in the same manner as described above.

For example, in this embodiment, the lower base member 22 is designed to be upwardly moved by the hydraulic cylinder 24 in the representative embodiment. However, the upper base member 12 can be designed to be downwardly moved by the hydraulic cylinder 24, if necessary.

## Claims

1. A molding machine (1), comprising:
first and second dies (13, 23) arranged and constructed to be closed and opened; and
first and second trimming members (17, 27) arranged and constructed to engage with each other after the first and second dies are closed, wherein
- the first and second dies (13, 23) are arranged and constructed to press, when closed, a resin based sheet material (S') so as to form a molded material (S),
- the first and second trimming members (17, 27) are arranged and constructed to engage with each other to circumferentially trim the molded material (S) so as to produce a molded article (Sa) and a waste strip (Sb), and
- the first trimming member (17) is movably associated with the first die (13),
**characterized in that**
the first trimming member (17) extends around the first die (13) such that the produced molded article (Sa) can be retained on the first die (13) by means of the first trimming member (17) by a frictional force between the molded article (Sa) and the first trimming member (17) when the first and second dies (13, 23) are opened.

2. The molding machine as defined in claim 1, further comprising first and second cutting members (18, 28) arranged and constructed to engage with each other after the first and second dies (13, 23) are closed, wherein when the first and second cutting members (18, 28) engage with each other, the waste strip (Sb) is cut.

3. The molding machine as defined in claim 1 or 2, further comprising a suction device (16) arranged and constructed to retain a periphery of the molded material (S) by a suction force thereof.

4. The molding machine as defined in claim 3 further comprising a support member (26) arranged and constructed to support the periphery of the molded material (S), and wherein the support member (26) aligns with the suction device (16).

5. The molding machine as defined in any of the preceding claims, further comprising:
a first base member (12); and
a second base member (22) arranged and constructed to move toward and away from the first base member (12); wherein
- the first die (13) is movably connected to the first base member (12);
- the second die (23) is connected to the second base member (22);
- the first trimming member (17) is attached to the first base member (12);
- the second trimming member (27) attached to the second die (23);
- when the second base member (22) is moved toward the first base member (12), the first and second dies (12, 23) are closed, and
- when the second base member (22) is further moved toward the first base member (12), the first and second trimming members (17, 27) engage with each other.

## Patentansprüche

1. Formmaschine (1), die Folgendes umfasst:
ein erstes und ein zweites Formwerkzeug (13, 23), die so angeordnet und konstruiert sind, dass sie geschlossen und geöffnet werden können; und
ein erstes und ein zweites Entgratungselement (17, 27), die so angeordnet und konstruiert sind, dass sie ineinandergreifen, nachdem das erste und das zweite Formwerkzeug geschlossen sind, wobei
- das erste und das zweite Formwerkzeug (13, 23) so angeordnet und konstruiert sind, dass sie im geschlossenen Zustand ein harzbasiertes bahnförmiges Material (S') pressen, um ein geformtes Material (S) zu bilden,
- das erste und das zweite Entgratungselement (17, 27) so angeordnet und konstruiert sind, dass sie ineinandergreifen, um das geformte Material (S) am Umfang zu entgraten, um einen geformten Gegenstand (Sa) und einen Abfallstreifen (Sb) zu produzieren, und
- das erste Entgratungselement (17) beweglich mit dem ersten Formwerkzeug (13) verbunden ist,
**dadurch gekennzeichnet, dass**
das erste Entgratungselement (17) sich um das erste Formwerkzeug (13) herum erstreckt, so dass der hergestellte geformte Gegenstand (Sa) mit Hilfe des ersten Entgratungselements (17) durch eine Reibungskraft zwischen dem geformten Gegenstand (Sa) und dem ersten Entgratungselement (17) auf dem ersten Formwerkzeug (13) gehalten werden kann, wenn das erste und das zweite Formwerkzeug (13, 23) geöffnet werden.

2. Formmaschine nach Anspruch 1, die ferner ein erstes und ein zweites Schneidelement (18, 28) umfasst, die so angeordnet und konstruiert sind, dass sie ineinandergreifen, nachdem das erste und das zweite Formwerkzeug (13, 23) geschlossen sind, wobei dann, wenn das erste und das zweite Schneidelement (18, 28) ineinandergreifen, der Abfallstreifen (Sb) abgeschnitten wird.

3. Formmaschine nach Anspruch 1 oder 2, die ferner eine Saugvorrichtung (16) umfasst, die so angeordnet und konstruiert ist, dass sie einen Umfang des geformten Materials (S) durch ihre Saugkraft festhält.

4. Formmaschine nach Anspruch 3, die ferner ein Stützelement (26) umfasst, das so angeordnet und konstruiert ist, dass es den Umfang des geformten Materials (S) stützt, und wobei das Stützelement (26) auf die Saugvorrichtung (16) ausgerichtet ist.

5. Formmaschine nach einem der vorhergehenden Ansprüche, die ferner Folgendes umfasst:
eine erstes Basiselement (12); und
ein zweites Basiselement (22), das so angeordnet und konstruiert ist, dass es sich auf das erste Basiselement (12) zu und von diesem weg bewegt; wobei
- das erste Formwerkzeug (13) beweglich mit dem ersten Basiselement (12) verbunden ist;
- das zweite Formwerkzeug (23) mit dem zweiten Basiselement (22) verbunden ist;
- das erste Entgratungselement (17) an dem ersten Basiselement (12) befestigt ist;
- das zweite Entgratungselement (27) an dem zweiten Formwerkzeug (23) befestigt ist;
- wenn das zweite Basiselement (22) auf das erste Basiselement (12) zu bewegt wird, das erste und das zweite Formwerkzeug (13, 23) geschlossen werden, und
- wenn das zweite Basiselement (22) weiter auf das erste Basiselement (12) zu bewegt wird, das erste und das zweite Entgratungselement (17, 27) ineinandergreifen.

## Revendications

1. Machine de moulage (1) comprenant :
des première et seconde matrices (13, 23), agencées et conçues pour être fermées et ouvertes ; et
des premier et second organes de rognage (17, 27), agencés et conçus pour venir mutuellement en prise après la fermeture des première et seconde matrices, sachant que
- lesdites première et seconde matrices (13, 23) sont agencées et conçues pour comprimer un matériau en plaques (S') à base de résine, à l'état fermé, afin de former un matériau moulé (S),
- lesdits premier et second organes de rognage (17, 27) sont agencés et conçus pour venir en prise mutuelle afin de rogner circonférentiellement ledit matériau moulé (S), de manière à produire un article moulé (Sa) et une bande (Sb) vouée au rebut, et
- le premier organe de rognage (17) est associé à la première matrice (13) avec faculté de mouvement,
**caractérisée par le fait que**
le premier organe de rognage (17) s'étend autour de la première matrice (13), de façon telle que l'article moulé produit (Sa) puisse être retenu sur ladite première matrice (13) au moyen dudit premier organe de rognage (17), par une force de frottement agissant entre ledit article moulé (Sa) et ledit premier organe de rognage (17) lorsque les première et seconde matrices (13, 23) sont ouvertes.

2. Machine de moulage selon la revendication 1, comprenant, en outre, des premier et second organes de sectionnement (18, 28) agencés et conçus pour venir mutuellement en prise après la fermeture des première et seconde matrices (13, 23), la bande (Sb), vouée au rebut, étant découpée lorsque lesdits premier et second organes de sectionnement (18, 28) viennent en prise mutuelle.

3. Machine de moulage selon la revendication 1 ou 2, comprenant, en outre, un dispositif d'aspiration (16) agencé et conçu pour retenir une périphérie du matériau moulé (S) sous l'effet d'une force d'aspiration émanant dudit dispositif.

4. Machine de moulage selon la revendication 3, comprenant, en outre, un organe de support (26) agencé et conçu pour supporter la périphérie du matériau moulé (S), ledit organe de support (26) étant aligné avec le dispositif d'aspiration (16).

5. Machine de moulage selon l'une quelconque des revendications précédentes, comprenant, en outre :
un premier élément d'embase (12) ; et
un second élément d'embase (22) agencé et conçu pour se mouvoir en direction dudit premier élément d'embase (12), et pour s'éloigner de ce dernier ; sachant que
- la première matrice (13) est reliée au premier élément d'embase (12) avec faculté de mouvement ;
- la seconde matrice (23) est reliée au second élément d'embase (22) ;
- le premier organe de rognage (17) est rattaché audit premier élément d'embase (12) ;
- le second organe de rognage (27) est rattaché à ladite seconde matrice (23) ;
- lesdites première et seconde matrices (13, 23) sont fermées lorsque ledit second élément d'embase (22) est mû en direction dudit premier élément d'embase (12), et
- les premier et second organes de rognage (17, 27) viennent en prise mutuelle lors de la poursuite du mouvement dudit second élément d'embase (22) en direction dudit premier élément d'embase (12).
